Europäisches Patentamt

European Patent Office

Office européen des brevets

(11) Publication number: **0 213 900**
**A2**

# EUROPEAN PATENT APPLICATION

(21) Application number: 86306522.3

(22) Date of filing: 22.08.86

(51) Int. Cl.⁴: **C 04 B 35/66**
**C 04 B 38/10, B 22 D 41/02**

(30) Priority: 30.08.85 GB 8521665

(43) Date of publication of application:
11.03.87 Bulletin 87/11

(84) Designated Contracting States:
AT BE CH DE FR GB IT LI LU NL SE

(71) Applicant: FOSECO INTERNATIONAL LIMITED
285 Long Acre
Nechells Birmingham B7 5JR(GB)

(72) Inventor: Barnes, Andrew
6 Castle Hall
Glascote Tamworth Stoffordshire(GB)

(72) Inventor: Clark, Michael Robert
41 Red Hill
Stourbridge West Midlands(GB)

(72) Inventor: Flood, James
4 Lomax Close
Lichfield Staffordshire(GB)

(72) Inventor: Strawbridge, Ian
38 Norfolk Road
Erdington Birmingham B23 6NA(GB)

(74) Representative: Warman, Charles Alfred
Group Patents Department Foseco Minsep International
Limited 285 Long Acre
Nechells Birmingham B7 5JR(GB)

(54) Refractory compositions.

(57) A self-setting, foamed refractory composition comprises a particulate refractory material, a surfactant, water, a water soluble metal phosphate and alumina cement. The composition is suitable for forming a lining for a molten metal handling vessel such as a tundish or a ladle. The composition may be used to produce preformed shapes which are used to line the vessel or the composition may be used to produce a lining within the vessel.

EP 0 213 900 A2

## REFRACTORY COMPOSITIONS

This invention relates to refractory compositions for providing molten metal handling vessels with heat-insulating linings. The vessel may be for example a ladle, tundish or molten metal transfer channel such as a launder or furnace spout. The compositions are particularly suitable for providing a lining to be contacted by molten metal in the vessel and that lining may overlie a permanent refractory lining in the vessel, which has an outer shell, usually of metal e.g. steel.

According to the present invention there is provided a self-setting, foamed, refractory composition comprising a particulate refractory material, a surfactant, water, a water soluble metal phosphate, and alumina cement. The proportion of water present in the composition may be provided in whole or in part in the form of an aqueous solution of the surfactant.

The presence of soluble metal phosphate serves to promote the foaming effect of the surfactant. Additional advantages of using the phosphate in the refractory composition of the invention are that it enables the proportions of surfactant and water to be minimised, the setting of the alumina cement binder is accelerated and the high temperature strength of the inner lining formed from the refractory composition of the invention is increased.

However, it should be appreciated that in the final product according to this invention the soluble metal phosphate used during forming may no longer be present in soluble form.

The total water content of the refractory composition of the invention is such that sufficient water is available to ensure hydration of the cement and impart the required degree of fluidity to the composition for subsequent forming. Typically, the total water content may be in the range of from about 5 to 20% by weight.

The water soluble metal phosphate may be an alkali metal phosphate, an alkaline earth metal phosphate, a polyphosphate or a complex phosphate. A particularly preferred soluble metal phosphate is sodium hexametaphosphate.

The refractory compositions of the present invention are particularly suitable for application directly on to the permanent refractory lining of molten metal handling vessels.

The refractory composition of the invention may be applied to the permanent refractory lining when the residual temperature of the latter is as high as 80°C, e.g. from a previous use of the vessel. In this way the amount of water transferred to the permanent refractory lining is substantially reduced. In addition, such application may also serve to weaken the bond at the interface of the permanent lining and the applied layer of refractory composition of the invention thereby facilitating the removal of the latter after use of the vessel.

After setting and drying and/or firing, the compositions of the invention provide the permanent refractory with a highly erosion resistant layer to protect it from the erosive effects of molten metal and any accompanying slag or covering flux.  In view of the fact that the composition is foamed, its erosion resistance is surprising.  The refractory compositions of the invention have a more uniform structure than would be possible using a slurry-formed composition and, moreover, the density of the final product is more controllable than slurry-formed compositions. The layer is also highly heat-insulating in contrast to a typical permanent lining.  The foamed nature of the composition contributes to its good heat-insulating properties.

In addition, compositions of the invention may be used to form preformed shapes e.g. one-piece linings by moulding the compositions into a required shape and allowing the compositions to self-set.  The preformed shapes may then be installed in molten metal handling vessels as linings or parts of linings therefor.

According to a further aspect of the present invention there is provided a molten metal handling vessel having a heat-insulating lining formed from a self-setting, foamed composition of the invention.

The composition enables advantageous setting times to be obtained. Preferably, adequate lining strength is achieved within 40 to 180 minutes in the 12° to 30°C temperature range. The bench life of the self-setting composition may be from 5 to 60 minutes but typically is about 20 minutes.

The particulate refractory material is preferably calcined magnesite (which may be dead-burnt magnesite), and/or one or more of calcined dolomite, olivine, zircon, alumina (for example calcined bauxite or corundum), silica, chromite, chamotte, or other oxides or silicates. The total amount of particulate refractory material present in the composition may be from 65 to 95% by weight, preferably 70 to 80% by weight.

The surfactant may be anionic, amphoteric or non-ionic. Preferred surfactants are the anionic ones e.g. long chain alkyl sulphates or alkyl ether sulphates. The quantity of surfactant used in the refractory compositions of the invention will vary with its character but generally will be from about 0.01 to 1.0% by weight.

The alumina cement of the refractory composition according to the invention is preferably one having an $Al_2O_3$ content of from about 50 to about 85% by weight, e.g. a high alumina cement. An alumina cement in which the $Al_2O_3$ content is below the aforementioned minimum is unsatisfactory because the cement exhibits reduced refractoriness. The quantity of alumina cement used in the refractory compositions of the invention will be from about 3 to 15% by weight, preferably 4-10% by weight.

The refractory compositions used to form the inner linings of e.g. molten metal handling vessels according to the invention may also include up to 10% by weight of a particulate carbonaceous material e.g. graphite. It has been found that such carbonaceous material improves the erosion resistance of the composition when used in a continuous casting tundish particularly in the presence of aggressive i.e. highly erosive slags or covering fluxes. The use of this material also facilitates stripping of the inner lining after a casting sequence prior to the installation of a new lining. Also the erosion resistance may be enhanced, by the inclusion of for example, silicon carbide, silicon nitride or boron nitride.

It is preferred that the water content of refractory compositions of this invention is maintained at a very low level. When this is the case, it has been found preferable to mechanically vibrate the foamed compositions of the invention during forming of inner linings of molten metal handling vessels. It has also been found that the water content may be further reduced by the inclusion of up to 5% by weight of a thixotropic additive such as a microfine silica e.g. a fumed silica which enhances the fluidity of the foamed composition during vibration.

The refractory compositions of the invention may optionally include a proportion of a fibrous material in an amount of up to about 2% by weight. Preferred fibrous materials are polyester fibre and glass fibre which assist in controlling the density and offer enhanced permeability and "green" strength of linings formed from the compositions of the invention.

The soluble metal phosphate e.g. sodium phosphate in addition to its other properties acts as a sinter aid in the composition of the invention. Alternatively, as sinter aid, calcium tetraborate or powdered glass may be present in amounts up to 2% by weight of the refractory composition. Another sinter aid is ball clay which may be present up to 6% by weight. Within these concentrations, the sinter aid enhances the integrity of the refractory composition, in use as a lining in a molten metal handling vessel, at the molten metal/lining interface.

The refractory compositions of the invention are particularly advantageous in that they enable a molten metal handling vessel e.g. a tundish to be lined or relined with an inner lining effectively.

The inner lining may be effected using the refractory compositions of the invention by any means suitable for handling foamed compositions, including mechanical vibration, spraying and trowelling. One method of lining a tundish is to pump, the self-setting, foamed, refractory composition e.g. by means of a worm pump into a gap defined between a removable former and the permanent refractory lining of the tundish. The gap defined by the former and permanent lining should preferably be at least 20 mm, more generally in the 30 to 50 mm range and typically about 35 mm. However, the former may be adapted to provide for thicker sections to be formed in those areas which in use may encounter more severe erosion e.g. in the floor of a tundish or in a sidewall adjacent the slag line. An adequate lining life may be achieved with such a thickness, e.g. in a continuous casting sequence the lining may last for up to 4 hours or more. After use in a tundish or like vessel, the lining may be stripped cleanly leaving only a minor amount of easily removable residual lining material.

The self-setting foamed, refractory composition of the invention may be formed by mixing the constituents thereof together in any order, although, generally it is preferred that the particulate refractory material should be first mixed with the cement and phosphate followed by the water and lastly the surfactant which may be in an aqueous solution.

The foamed composition once formed may be applied by being pumped into the gap defined by the former and vessel and allowed to harden or set.  In most applications 30 to 180 minutes is satisfactory although 40 to 120 minutes is generally preferred.

After setting the former is withdrawn and residual water is removed.  This removal may be hastened for example by drying at temperatures of up to 600°C, typically 200°C or by firing the lining using gas burners at a temperature of up to about 1000°C.

On examination after drying or firing a foamed structure remains affording. enhanced insulation properties.

The density of the lining after firing may be in the range 1 to 2 $g.cm^{-3}$.  Optimum lining properties are generally obtained when the density of the lining is in the range 1.3 to 1.8 $g.cm^{-3}$.

The compositions of the invention may be used to line ladles and other similarly constructed metallurgical vessels as well as tundishes. They are particularly advantageous for forming linings in situ in vessels having curved wall and/or floor sections such as round bottom tundishes.

The invention therefore also includes a method of forming a lining in a molten metal handling vessel in which the lining is formed between the vessel and a former inserted in the vessel from the self-setting foamed refractory composition described above.

In one embodiment a former is inserted in the vessel so as to define a gap between the vessel and the former corresponding to a desired lining thickness, the self-setting foamed refractory composition is introduced into the gap until the gap is filled, the composition is allowed to set and the set composition is heated to remove substantially all free water retained in the composition after setting.

In another embodiment a quantity of the self-setting foamed refractory composition sufficient to line the vessel to a desired thickness
is introduced into the vessel, a vibratable former
is inserted in the vessel, the composition is
vibrated by means of the former to fill a gap
defined by the former and the vessel, the composition is allowed to set, the former is removed,
and the set composition is heated to remove substantially all free water retained in the composition after setting.

The invention is more particularly
described with reference to the following Examples.

### EXAMPLE 1

| Ingredient | % |
| --- | --- |
| Dead-burnt magnesite (Supplied by Radex GmbH, designated as Grade HBG Normal) | 77.2 |
| Alumina cement ($Al_2O_3$ content = 70% $CaO:Al_2O_3$ ratio 1:2.63) | 8.7 |
| 0.7% solids solution of sodium alkyl sulphate (Average m.w. 260) | 4.1 |
| Sodium hexametaphosphate | 1.5 |
| Water | 8.5 |

(Total water content 12.5%)

The magnesite, cement and sodium hexametaphosphate were mixed together in a planetary mixer and then the water was added followed by the surfactant solution and mixed for 2 minutes at each stage resulting finally in a foamed mixture. This mixture was introduced into a laboratory scale, 75 kg capacity tundish and vibrated by means of a former to provide a floor and wall lining 40 mm thick. The former was removed after 60 minutes. The initial density of the foamed mixture after setting was 1.7 g.cm$^{-3}$. After subsequent drying at 180°C for 2 hours the density was 1.55 g.cm$^{-3}$. The ambient temperature was 20°C. The bench life of the composition was 10 minutes. Molten steel and an accompanying highly erosive covering slag was charged into the tundish and held at 1550°C for 90 minutes. The steel was continuously stirred during the holding period. At the end of the holding time the steel was emptied and the tundish allowed to cool. On inspection the area of the lining contacted by the slag had been eroded by between 10 to 15 mm whereas the erosion of the area of the lining contacted by the molten steel was 2mm.

Having regard to the severity of the test conditions, these results indicate that the refractory composition yields good erosion resistance.

EXAMPLE 2

The conditions of Example 1were repeated with the exception that the capacity of the tundish was 20 tonnes and the former was not removed until 120 minutes had elapsed. The self-set refractory lining thus formed was sufficiently coherent to permit the manual installation of tundish accessories such as dams and weirs. The residual free water retained in the lining was removed using gas burners at a temperature of 500°C for 2 hours prior to the introduction of molten steel.

EXAMPLE 3

| Ingredient | % |
|---|---|
| Dead-burnt magnesite (As Example 1) | 76.0 |
| Alumina cement (As Example 1) | 8.6 |
| Sodium hexametaphosphate | 0.8 |

Microfine silica
(Particle size - 15 μm)                    3.8

Water                                       6.5

0.7% solids solution of
sodium alkyl sulphate                       4.0

(Total water content 10.4%)

The refractory composition was prepared in the manner described in Example 1. The proportion of microfine silica provided enhanced fluidity, allowance being given for the reduced water content of this composition, which enabled the composition to be readily formed into inner linings for the laboratory scale tundish using a vibratable former. Similar test results to those obtained for Example 1 were obtained in Example 3.

1.      A self-setting, foamed refractory composition characterised in that the composition comprises a particulate refractory material, a surfactant, water, a water soluble metal phosphate and alumina cement.

2.      A refractory composition according to claim 1 characterised in that the particulate refractory material is one or more of calcined magnesite, calcined dolomite, olivine, zircon, corundum, calcined bauxite, silica, chromite and chamotte.

3.      A refractory composition according to claim 1 or claim 2 characterised in that it contains 65-95% by weight of particulate refractory material.

4.      A refractory composition according to claim 3 characterised in that it contains 70-80% by weight particulate refractory material.

5.      A refractory composition according to any of claims 1 to 4 characterised in that the surfactant is anionic, amphoteric, or non-ionic.

6.      A refractory composition according to claim 5 characterised in that the surfactant is a long chain alkyl sulphate or alkyl ether sulphate.

7.      A refractory composition according to any of claims 1 to 6 characterised in that it contains 0.01 - 1.0% by weight surfactant.

8.      A refractory composition according to any of claims 1 to 7 characterised in that it contains 5 - 20% by weight water.

9.      A refractory composition according to any of claims 1 to 8 characterised in that the water soluble metal phosphate is an alkali metal phosphate, an alkaline earth metal phosphate, a polyphosphate or a complex phosphate.

10.      A refractory composition according to claim 9 characterised in that the water soluble metal phosphate is sodium hexametaphosphate.

11.      A refractory composition according to any of claims 1 to 10 characterised in that the alumina cement contains 50-85% by weight alumina.

12.        A refractory composition according to
any of claims 1 to 11 characterised in that it contains
3-15% by weight alumina cement.


13.        A refractory composition according to
claim 12 characterised in that it contains 4-10% by
weight alumina cement.


14.        A refractory composition according to
any of claims 1 to 13 characterised in that it also
contains a particulate carbonaceous material.


15.        A refractory composition according to
claim 14 characterised in that it contains up to 10%
by weight particulate carbonaceous material.


16.        A refractory composition according to
claim 14 or claim 15 characterised in that the
carbonaceous material is graphite.


17.        A refractory composition according to
any of claims 1 to 16 characterised in that it also
contains silicon carbide, silicon nitride or boron
nitride.

18.      A refractory composition according to any of claims 1 to 17 characterised in that it also contains a thixotropic additive.

19.      A refractory composition according to claim 18 characterised in that it contains up to 5% by weight of thixotropic additive.

20.      A refractory composition according to claim 18 or claim 19 characterised in that the thixotropic additive is microfine silica.

21.      A refractory composition according to any of claims 1 to 20 characterised in that it also contains a fibrous material.

22.      A refractory composition according to claim 21 characterised in that it contains up to 2% by weight fibrous material.

23.      A refractory composition according to claim 21 or claim 22 characterised in that the fibrous material is polyester fibre or glass fibre.

24.      A refractory composition according to any of claims 1 to 23 characterised in that it also contains a sinter aid.

25.      A refractory composition according to claim 24 characterised in that the sinter aid is calcium tetraborate or powdered glass.

26.      A refractory composition according to claim 25 characterised in that it contains up to 2% by weight calcium tetraborate or powdered glass.

27.      A refractory composition according to claim 24 characterised in that the sinter aid is ball clay.

28.      A refractory composition according to claim 27 characterised in that it contains up to 6% by weight ball clay.

29.      A molten metal handling vessel having a heat-insulating lining characterised in that the lining is formed from a self-setting foamed refractory composition according to any of claims 1 to 28.

0213900

30.　　　A method of forming a lining in a molten metal handling vessel in which the lining is formed between the vessel and a former inserted in the vessel characterised in that the lining is formed from a self-setting foamed refractory composition according to any of claims 1 to 28.

31.　　　A method of forming a lining in a molten metal handling vessel according to claim 30 characterised in that the former is inserted in the vessel so as to define a gap between the vessel and the former corresponding in width to a desired lining thickness, the self-setting foamed refractory composition is introduced into the gap until the gap is filled, the composition is allowed to set, the former is removed, and the set composition is heated to remove substantially all free water retained in the composition after setting.

32.　　　A method of forming a lining in a molten metal handling vessel according to claim 30 characterised in that a quantity of the self-setting foamed refractory composition sufficient to line the vessel to a desired thickness is introduced into the vessel, a vibratable former is inserted in the vessel, the composition is vibrated by means of the former to fill a gap defined by the former and the vessel, the composition is allowed to set, the former is removed, and the set composition is heated to remove substantially all free water retained in the composition after setting.